# EUROPÄISCHE PATENTSCHRIFT

(11) **EP 0 894 984 B1**
(45) Veröffentlichungstag und Bekanntmachung des Hinweises auf die Patenterteilung: **27.03.2002**
(21) Anmeldenummer: 98113618.7
(22) Anmeldetag: 22.07.1998
(51) Int. Cl.: F16B 5/02

(54) **Langlochführung zwischen zwei Bauteilen**
Elongated aperture guide between two elements
Guidage à trou alongé entre deux éléments

(30) Priorität: 02.08.1997 DE 19733471
(43) Veröffentlichungstag der Anmeldung: 03.02.1999
(73) Patentinhaber: DaimlerChrysler AG, 70567 Stuttgart (DE)
(72) Erfinder: Kober, Peer-Olaf, 71106 Magstadt (DE)

(56) Entgegenhaltungen:
- DE-A- 4 240 079
- DE-U- 29 622 205
- FR-A- 2 692 325
- KRUHN/NOERTEMANN/STENGER: "konstruktionselemente" 1990 , VOGEL-VERLAG , DE XP002084876 1 * Seite 14 - Seite 36 *

## Beschreibung

Die Erfindung betrifft eine Langlochführung zwischen zwei Bauteilen gemäß dem Oberbegriff des Anspruches 1.

Eine derartige Langlochführung wird dazu verwendet, um zwischen zwei Bauteilen eine geführte, bidirektionale Verstellung bzw. Verschiebung zu ermöglichen. Um eine möglichst exakte Führung zu erreichen, ist zwischen dem Langloch und der darin geführten Führungsbuchse ein relativ geringes Spiel vorgesehen. Wenn aufgrund von Winkel- oder Fertigungstoleranzen die Außenseiten der Führungsbuchse nicht parallel zu den gegenüberliegenden Innenseiten des Langloches verlaufen, kann es zu Verkantungen kommen, so daß die Langlochführung nur ein schwergängiges Verstellen der Bauteile gegeneinander ermöglicht.

Winkelabweichungen zwischen den Außenseiten der Führungsbuchse und der jeweils zugeordneten Innenseite des Langloches können beispielsweise dann auftreten, wenn die Gewindebohrung nicht senkrecht zur Oberfläche des geführten Bauteiles eingebracht ist, wenn das sich am geführten Bauteil abstützende axiale Ende der Führungsbuchse nicht rechtwinklig zur Außenseite der Führungsbuchse bzw. deren Längsachse verläuft oder wenn die Innenseiten des Langloches nicht rechtwinklig zur Ober- oder Unterseite des führenden Bauteils verlaufen. Ein Winkelversatz kann auch dann auftreten, wenn die durch die Langlochführung zueinander verstellbaren Bauteile geneigt zueinander angeordnet sind.

Die vorliegende Erfindung beschäftigt sich mit dem Problem, eine Langlochführung der eingangs genannten Art derart auszugestalten, daß sie auch bei größeren Winkeltoleranzen bei den entsprechenden Elementen ein leichtgängiges Verstellen zwischen den Bauteilen ohne Verkanten gewährleistet.

Dieses Problem wird erfindungsgemäß mit einer Langlochführung mit den Merkmalen des Anspruches 1 gelöst.

Die Erfindung beruht auf dem allgemeinen Gedanken, eine Langlochführung zu schaffen, deren Führungsbuchse bei ihrer Befestigung am geführten Bauteil ausgerichtet werden kann, so daß ihre Außenseiten parallel zu den daran entlang gleitenden Innenseiten des Langloches verlaufen. Auf diese Weise können sämtliche Winkelabweichungen, die zu einem Verkanten führen könnten, während der Befestigung der Führungsbuchse ausgeglichen werden, so daß die erfindungsgemäße Langlochführung eine leichtgängige Verstellbewegung zwischen den Bauteilen ermöglicht, ohne daß es zu einem Verklemmen oder Verkeilen kommt.

Beim Ausrichten der Längsachse der Führungsbuchse parallel zur Mittellängsebene des Langloches kann sich eine Neigung zwischen der Schraubenlängsachse und der Führungsbuchsenlängsachse einstellen. Eine in üblicher Weise ausgebildete Führungsbuchse, deren sich am geführten Bauteil abstützende Stirnseite eben ausgebildet ist, würde in diesem Fall nur an einer Stelle entlang der Umfangskante ihrer Stirnseite auf dem geführten Bauteil aufliegen und könnte in dieser Stellung nicht ohne weiteres mit der Schraube befestigt werden.

Die erfindungsgemäß ausgestaltete Führungsbuchse ist an ihrem dem geführten Bauteil zugewandten axialen Ende angefast. Bei der Befestigung der Führungsbuchse dringt das angefaste Ende in den angesenkten Bereich der Gewindebohrung für die Schraube ein. Je nach Ausrichtung der Führungsbuchse dringt die Anfasung in einem Bereich tiefer als am diametral gegenüberliegenden Bereich in die Ansenkung ein. Beim Festziehen der Schraube stützt sich die Führungsbuchse mit ihrer Anfasung in der Ansenkung am geführten Bauteil ab. Dabei kann es dazu kommen, daß das angefaste Ende der Führungsbuchse bereichsweise zwischen der Ansenkung und dem Schraubenschaft eingekeilt bzw. festgeklemmt wird, wodurch sich die Fixierung der Führungsbuchse in dieser Stellung verstärkt.

Die Schraube durchdringt die Führungsbuchse mit radialem Spiel, damit die Führungsbuchse gegenüber dem Schraubenschaft Kippbewegungen durchführen kann, um die Führungsbuchse winkelmäßig an den Verlauf der Langlochinnenseiten anzugleichen.

Bei einer bevorzugten Ausführungsform mit den Merkmalen des Anspruches 2 wird insbesondere bei der Verwendung einer kugelflächenförmigen Anfasung die Auflagefläche der Führungsbuchse in der Anfasung vergrößert, wodurch sich die relative Lage der Führungsbuchse beim Festziehen der Schraube stabilisiert.

Bei einer Weitergestaltung der erfindungsgemäßen Langlochführung mit den Merkmalen des Anspruches 3 wird erreicht, daß die am geführten Bauteil befestigte Führungsbuchse nicht aus dem Langloch herausbewegt werden kann, wodurch die beiden Bauteile über die erfindungsgemäße Langlochführung aneinander befestigt sind. Zusätzlich bewirkt der erfindungsgemäß vorgesehene Kragen, daß das führende Bauteil nicht mit dem Schraubenkopf in Kontakt kommt, wodurch ein Lösen der Schraube durch das daran entlang verstellte führende Bauteil verhindert wird.

Vorteilhafterweise kann die erfindungsgemäß ausgebildete Führungsbuchse die Merkmale des Anspruches 4 aufweisen, wodurch die für die Befestigung der Führungsbuchse erforderliche Krafteinleitung verbessert werden kann.

Mit Hilfe einer Ausgestaltung mit den Merkmalen des Anspruches 5 wird ein Verdrehen der Bauteile gegeneinander verhindert.

Um die Krafteinleitung für die Befestigung der Führungsbuchse zu verbessern, kann die erfindungsgemäße Langlochführung auch die Merkmale des Anspruches 6 aufweisen.

Bei einer Weiterbildung der erfindungsgemäßen Langlochführung mit den Merkmalen des Anspruches 7 wird die Auflagefläche vergrößert, auf der sich die Führungsbuchse an der Ansenkung bzw. am geführten Bauteil abstützt. Damit wird wiederum die Lage der geneigt befestigten Führungsbuchse stabilisiert.

Bei einer Weiterbildung der erfindungsgemäßen Langlochführung mit den Merkmalen des Anspruches 8 und insbesondere mit den Merkmalen des Anspruches 9 ist es möglich, die Schraube im geführten Bauteil zu fixieren und dabei gleichzeitig ein axiales Spiel zwischen der Führungsbuchse und der Schraube bzw. deren Kopf zu gewährleisten. Auf diese Weise bleibt die durch die Schraube befestigte bzw. gesicherte Führungsbuchse winkelmäßig ausrichtbar.

Weitere Merkmale und Vorteile ergeben sich aus den Unteransprüchen und aus der nachfolgenden Beschreibung eines Ausführungsbeispieles.

Es zeigen, jeweils schematisch,
- Fig. 1: eine Draufsicht auf eine Langlochführung,
- Fig. 2: eine Schnittansicht entsprechend den Schnittlinien II, III - II, III in Fig. 1 bei einer Langlochführung gemäß dem Stand der Technik und
- Fig. 3: eine Schnittansicht entsprechend den Schnittlinien II, III - II, III in Fig. 1 bei einer erfindungsgemäßen Langlochführung.

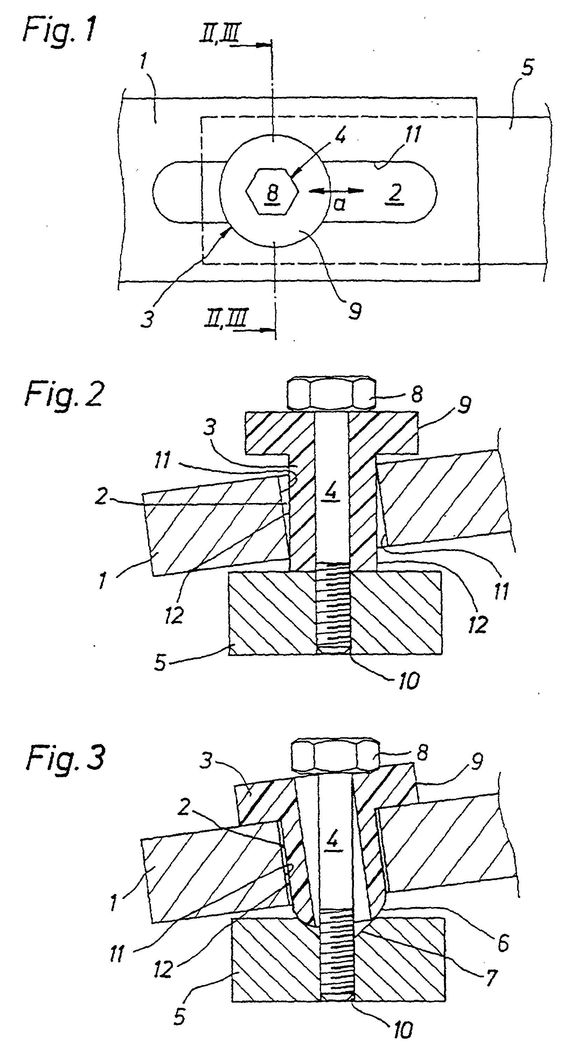

Entsprechend Fig. 1 weist bei einer Langlochführung ein erstes Bauteil 1 ein Langloch 2 auf, durch das eine Führungsbuchse 3 in ihrer Längsrichtung durchgesteckt ist. Die Führungsbuchse 3 ist mit Hilfe einer Schraube 4, die in Längsrichtung durch die Führungsbuchse 3 hindurchgesteckt ist, an einem zweiten Bauteil 5 befestigt. Die Führungsbuchse 3 ist im Langloch 2 in der Längsrichtung des Langloches 2 bidirektional verschiebbar. Auf diese Weise sind die Bauteile 1 und 5 entsprechend dem Doppelpfeil a gegeneinander verstellbar, wobei die Verstellbewegung durch die vom Langloch 2 eingefaßte Führungsbuchse 3 geführt ist. Das das Langloch 2 enthaltende erste Bauteil 1 ist dabei das führende Bauteil 1, während das mit der Führungsbuchse 3 verbundene zweite Bauteil 5 das geführte Bauteil 5 ist.

Aufgrund von Fertigungstoleranzen kann sich zwischen den aneinander anliegenden Elementen der Langlochführung bzw. zwischen den Bauteilen 1 und 5 ein Winkelversatz ausbilden. Auf diese Weise kann es entsprechend Fig. 2 bei einer Langlochführung gemäß dem Stand der Technik dazu kommen, daß die Innenseiten 11 des Langloches 2 des führenden Bauteils 1 bezüglich der Längsachse der Führungsbuchse 3 bzw. deren Außenseiten 12 geneigt verlaufen. Vor allem bei einem geringen Spiel zwischen der Außenseite 12 der Führungsbuchse 3 und der Innenseite 11 des Langloches 2, was zur Erzielung einer qualitativ hochwertigen Führung notwendig ist, kann dann das führende Bauteil 1 gegenüber der Führungsbuchse 3 verkeilen oder verkanten, wodurch die Langlochführung schwergängig ist oder sogar blockiert.

Entsprechend Fig. 3 ist bei der erfindungsgemäßen Langlochführung der Innendurchmesser der Führungsbuchse 3 größer als der Außendurchmesser des Schaftes der Schraube 4, wodurch sich ein radiales Spiel ausbildet. Auf diese Weise kann die Führungsbuchse 3 gegenüber der Schraube 4 gekippt werden, so daß die Längsachse der Führungsbuchse 3 gegenüber der Längsachse der Schraube 4 geneigt verläuft. Diese winkelmäßige Verstellbarkeit der Führungsbuchse 3 ermöglicht es, die Führungsbuchse 3 winkelmäßig auf die Lage des führenden Bauteils 1 bzw. dessen Langloches 2 auszurichten. Bei der Darstellung entsprechend Fig. 3 ist eine derartige Ausrichtung durchgeführt, so daß die Längsachse der Führungsbuchse 3 bzw. ihre Außenseiten 12 parallel zu den Innenseiten 11 des Langloches 2 verlaufen. Bei einer solchen parallelen Ausrichtung der aneinander entlanggleitenden Flächen bzw. Seiten, ist die Gefahr, daß ein Verklemmen oder Verkeilen der so geführten Bauteile auftritt, deutlich reduziert.

Um die Führungsbuchse 3 auch in einer gegenüber der Schraube 4 geneigten Position am geführten Bauteil 5 sicher befestigen zu können, ist das dem geführten Bauteil 5 zugewandte axiale Ende der Führungsbuchse 3 angefast 6. Die Anfasung 6 ist im Ausführungsbeispiel kugelflächenförmig ausgebildet. Zusätzlich ist eine Gewindebohrung 10, in der die Schraube 4 im geführten Bauteil 5 verankert ist, angesenkt 7. Im Ausführungsbeispiel ist diese Ansenkung 7 konisch ausgebildet. Beim Festziehen der Schraube 4 dringt die Anfasung 6 in die Ansenkung 7 ein, wodurch sich eine relativ großflächige Abstützfläche für die Führungsbuchse 3 gegenüber dem geführten Bauteil 5 ergibt, so daß die Führungsbuchse 3 auch in einer gegenüber der Schraube 4 geneigten Position sicher befestigbar ist. Dabei kann auch der Fall eintreten, daß in einem bestimmten Bereich die Anfasung 6 so weit in die Ansenkung 7 eingedrückt wird, daß sie sich zwischen der Ansenkung 7 und dem Schaft der Schraube 4 verkeilt, wodurch die Festigkeit der in dieser Position erreichbaren Fixierung der Führungsbuchse 3 erhöht wird.

Bei einer besonderen Ausführungsform kann die Führungsbuchse 3 aus einem Kunststoff hergestellt sein. Dabei kann sich der Schraubenkopf 8 beim Festziehen der Schraube 4 in das dem Schraubenkopf 8 zugewandte stirnseitige Ende der Führungsbuchse 3 eindrücken bzw. eingraben. Auf diese Weise wird eine formschlüssige Verbindung zwischen dem Schraubenkopf 8 und dem zugehörigen Ende der Führungsbuchse 3 ausgebildet, was einerseits die Einleitung der Haltekräfte zur Befestigung der Führungsbuchse 3 am geführten Bauteil 5 verbessert und andererseits ein selbsttätiges Verdrehen der Schraube 4 verhindert.

Das dem Schraubenkopf 8 zugewandte Ende der Führungsbuchse 3 ist mit einem radial nach außen abstehenden Kragen 9 versehen, an dem der Schraubenkopf 8 an seiner Unterseite zur Befestigung der Führungsbuchse 3 aufliegt, um die Befestigungskräfte in die Führungsbuchse 3 einzuleiten. Der Kragen 9 überlappt dabei an das Langloch 2 angrenzende Bereiche im führenden Bauteil 1, wodurch sich das führende Bauteil 1 nicht vom geführten Bauteil 5 von selbst lösen kann. Um eine möglichst leichtgängige Langlochführung zu erhalten, ist bei einer derartigen Ausführungsform die Länge der Führungsbuchse 3 so gewählt, daß sich für das zwischen dem Kragen 9 und dem geführten Bauteil 5 angeordnete führende Bauteil 1 ein bezüglich der Führungsbuchse 3 axiales Spiel ausbildet, auch wenn die Führungsbuchse 3 geneigt zur Schraube 4 befestigt ist und die Anfasung 6 (teilweise) in die Ansenkung 7 eindringt.

## Patentansprüche

1. Langlochführung zwischen zwei Bauteilen, bei der im ersten, führenden Bauteil ein Langloch vorgesehen ist, in dem eine Führungsbuchse quer zu ihrer Längsachse gleitend verstellbar ist, die mit einer sie längs durchdringenden Schraube am zweiten, geführten Bauteil befestigt ist, wobei die Schraube in einer im geführten Bauteil eingebrachten Gewindebohrung verankert ist,
**dadurch gekennzeichnet,**
**daß** die Schraube (4) die Führungsbuchse (3) mit radialem Spiel durchdringt, daß die Gewindebohrung (10) angesenkt (7) ist und daß ein sich am geführten Bauteil (5) abstützendes axiales Ende der Führungsbuchse (3) außen angefast (6) ist und in den angesenkten Bereich (7) der Gewindebohrung (10) eindringt.

2. Langlochführung nach Anspruch 1,
**dadurch gekennzeichnet,**
**daß** die Anfasung (6) am axialen Ende der Führungsbuchse (3) konisch oder kugelflächenförmig ausgebildet ist.

3. Langlochführung nach einem der vorhergehenden Ansprüche,
**dadurch gekennzeichnet,**
**daß** das dem angefasten Ende gegenüberliegende Ende der Führungsbuchse (3) mit einem radial nach außen abstehenden, umlaufenden Kragen (9) versehen ist, dessen Außendurchmesser größer als die Breite des zugeordneten Langloches (2) ist, wobei die axiale Länge der Führungsbuchse (3) so bemessen ist, daß zwischen dem führenden Bauteil (1) und einer diesem zugewandten Unterseite des Kragens (9) axiales Spiel vorhanden ist, wenn die Führungsbuchse (3) am geführten Bauteil (5) befestigt ist.

4. Langlochführung nach Anspruch 3,
**dadurch gekennzeichnet,**
**daß** die Oberseite des Kragens (9) konvex gewölbt, insbesondere kugelflächenförmig, ausgebildet ist.

5. Langlochführung nach einem der vorhergehenden Ansprüche,
**dadurch gekennzeichnet,**
**daß** die Führungsbuchse (3) einen rechteckigen Außenquerschnitt aufweist.

6. Langlochführung nach einem der vorhergehenden Ansprüche,
**dadurch gekennzeichnet,**
**daß** die an der Führungsbuchse (3) anliegende Unterseite des Schraubenkopfes (8) konvex gewölbt, insbesondere kugelflächenförmig, ausgebildet ist.

7. Langlochführung nach einem der vorhergehenden Ansprüche,
**dadurch gekennzeichnet,**
**daß** die Ansenkung (7) der Gewindebohrung (10) konisch oder kugelflächenförmig ausgebildet ist.

8. Langlochführung nach einem der vorhergehenden Ansprüche,
**dadurch gekennzeichnet,**
**daß** eine Drehsicherung vorgesehen ist, die ein selbsttätiges Verdrehen der Schraube (4) in der Gewindebohrung (10) verhindert.

9. Langlochführung nach Anspruch 8,
**dadurch gekennzeichnet,**
**daß** die Drehsicherung aus einer ringförmigen Kunststoffeinlage besteht, die bei eingeschraubter Schraube (4) zwischen dem Gewinde der Schraube (4) und dem Gewinde der Gewindebohrung (10) angeordnet ist.

## Claims

1. Slot guide between two components wherein a slot is provided in the first, guiding component, in which a guide bush can be slidindgly displaced transversely to its longitudinal axis, being secured to the second, guided component by means of a screw inserted longitudinally therethrough, the screw being anchored in a threaded bore provided in the guided component,
**characterised in that**
the screw (4) is inserted in the guide bush (3) with a radial clearance, the threaded bore (10) is counter-sunk (7) and an axial end of the guide bush (3) supported on the guided component (5) is outwardly bevelled (6) and penetrates the counter-sunk region (7) of the threaded bore (10).

2. Slot guide as claimed in claim 1,
**characterised in that**
the bevel (6) at the axial end of the guide bush (3) has a conically or spherically shaped surface.

3. Guide slot as claimed in one of the preceding claims,
**characterised in that**
the end of the guide bush (3) lying opposite the bevelled end is provided with an outwardly projecting, surrounding collar (9), the external diameter of which is bigger than the width of the co-operating slot (2), the axial length of the guide bush (3) being so dimensioned that an axial clearance is left between the guiding component (1) and a bottom face of the collar (9) directed towards it when the guide bush (3) is secured on the guided component (5).

4. Slot guide as claimed in claim 3,
**characterised in that**
the top face of the collar (9) has a convex curvature, in particular having a spherically shaped surface.

5. Slot guide as claimed in one of the preceding claims,
**characterised in that**
the guide bush (3) has a rectangular external cross section.

6. Slot guide as claimed in one of the preceding claims,
**characterised in that**
the bottom face of the screw head (8) lying against the guide bush (3) has a convex curvature, in particular having a spherically shaped surface.

7. Guide slot as claimed in one of the preceding claims,
**characterised in that**
the counter-sunk region (7) of the threaded bore (10) has a conically or spherically shaped surface.

8. Guide slot as claimed in one of the preceding claims,
**characterised in that**
an anti-rotation mechanism is provided which prevents the screw (4) from rotating of its own accord in the threaded bore (10).

9. Guide slot as claimed in claim 8,
**characterised in that**
the anti-rotation mechanism consists of an annular plastics insert, which is disposed between the thread of the screw (4) and the thread of the threaded bore (10) when the screw (4) is screwed in.

## Revendications

1. Guide à trou allongé entre deux composants, dans lequel il est prévu dans le premier composant de guidage un trou allongé, dans lequel peut être déplacée par glissement, transversalement à son axe longitudinal, une douille de guidage, qui est fixée par une vis, qui la traverse longitudinalement, sur le second composant guidé, la vis étant ancrée dans un perçage taraudé aménagé dans le composant guidé, **caractérisé en ce que** la vis (4) traverse la douille de guidage (3) avec un certain jeu radial, que le perçage taraudé (10) est fraisé (7) et qu'une extrémité axiale, qui prend appui sur le composant guidé (5), de la douille de guidage (3) est chanfreinée extérieurement (6) et pénètre dans la partie fraisée (7) du perçage taraudé (10).

2. Guide à trou allongé selon la revendication 1, **caractérisé en ce que** le chanfrein (6) sur l'extrémité axiale de la douille de guidage (3) est agencé avec une forme conique ou une forme de surface sphérique.

3. Guide à trou allongé selon l'une des revendications précédentes, **caractérisé en ce que** l'extrémité, située à l'opposé de l'extrémité chanfreinée, de la douille de guidage (3) comporte un collet périphérique (9) qui fait saillie radialement vers l'extérieur et dont le diamètre extérieur est supérieur à la largeur du trou allongé associé (2), la longueur axiale de la douille de guidage (3) étant dimensionnée de telle sorte qu'existe un jeu axial entre le composant de guidage (1) et une face inférieure du collet (9), tournée vers ce composant, lorsque la douille de guidage (3) est fixée sur la composant guidé (5).

4. Guide à trou allongé selon la revendication 3, **caractérisé en ce que** la face supérieure du collet (9) est réalisée en étant cintrée avec une forme convexe, notamment une forme de surface sphérique.

5. Guide à trou allongé selon l'une des revendications précédentes, **caractérisé en ce que** la douille de guidage (3) possède une section transversale extérieure rectangulaire.

6. Guide à trou allongé selon l'une des revendications précédentes, **caractérisé en ce que** la face inférieure, appliquée contre la douille de guidage (3), de la tête de vis (8) est cintrée avec une forme convexe et notamment est réalisée avec une forme de surface sphérique.

7. Guide à trou allongé selon l'une des revendications précédentes, **caractérisé en ce que** le fraisage (7) du perçage taraudé (10) est réalisé avec une forme conique ou avec la forme d'une surface sphérique.

8. Guide à trou allongé selon l'une des revendications précédentes, **caractérisé en ce qu'**il est prévu un système de blocage contre une rotation, qui empêche une rotation automatique de la vis (4) dans le perçage taraudé (10).

9. Guide à trou allongé selon la revendication 8, **caractérisé en ce que** le dispositif de blocage contre une rotation est constitué par un insert de forme annulaire en matière plastique, qui est disposé, lorsque la vis (4) est vissée, entre le filetage de la vis (4) et le filetage du perçage taraudé (10).
